# DEMANDE DE BREVET EUROPEEN

(11) **EP 1 217 281 A1**
(43) Date de publication de la demande: **26.06.2002**
(21) Numéro de dépôt: 01403010.0
(22) Date de dépôt: 23.11.2001
(51) Int. Cl.: F16L 11/127, B32B 1/08, C08L 27/16, C08L 53/00, C08L 27/12

(54) **Tube à base d'élastomére vulcanisé et de polymére fluoré**

(30) Priorité: 11.12.2000 FR 0016067
(71) Demandeur: Atofina, 92800 Puteaux (FR)
(72) Inventeur: Merziger, Joachim, 27000 Evreux (FR); Maldeme, Christophe, 78120 Rambouillet (FR)
(74) Mandataire: Neel, Henry

(57) **Abrégé**

La présente invention concerne un tube ayant dans sa direction radiale, de l'intérieur vers l'extérieur:
1) une couche dite intérieure destinée à entrer en contact avec un fluide circulant, la dite couche intérieure comprenant (i) un polymère fluoré, (ii) éventuellement un produit électroconducteur et (iii) un copolymère tribloc ABC, les trois blocs A, B, et C étant reliés entre eux dans cet ordre, chaque bloc étant soit un homopolymère soit un copolymère obtenu à partir de deux ou plusieurs monomères, le bloc A étant relié au bloc B et le bloc B au bloc C au moyen d'une liaison covalente ou d'une molécule intermédiaire reliée à l'un de ces blocs par une liaison covalente et à l'autre bloc par une autre liaison covalente, et tel que :
   - le bloc A est compatible avec le polymère fluoré,
   - le bloc B est incompatible avec le polymère fluoré et est incompatible avec le bloc A,
   - le bloc C est incompatible avec le polymère fluoré, le bloc A et le bloc B,
2) éventuellement une couche de liant,
3) une couche d'élastomere vulcanisé.

**Selon une deuxième forme de l'invention** la couche intérieure est elle même constituée de deux couches l'une contenant un produit électroconducteur l'autre ne contenant pas de produit électroconducteur. Avantageusement celle qui est au contact du fluide circulant contient le produit électroconducteur.

**Selon une troisième forme de l'invention** on dispose une couche de polymère fluoré entre la couche intérieure et la couche de liant ou entre la couche intérieure et la couche d'élastomère vulcanisé si il n'y a pas de liant.

La deuxième et la troisième forme de l'invention peuvent exister simultanément pour le même tube.

## Description

### [Domaine de l'invention]

la présente invention concerne des tubes à base d'élastomère vulcanisé et de polymère fluoré et plus particulièrement des tubes ayant une couche intérieure en polymère fluoré et une couche extérieure en élastomère vulcanisé. Ces tubes sont utiles par exemple dans les automobiles pour amener l'essence du réservoir jusqu'au système d'injection, pour le circuit de climatisation, pour le liquide de refroidissement et pour transférer les fluides d'une pile à combustible (fuel cell).

### [l'art antérieur et le problème technique]

On a décrit dans le brevet EP 683725 des tuyaux constitués successivement d'une couche intérieure en PVDF (polyfluorure de vinylidène), d'un liant de coextrusion et d'une couche extérieure en élastomère vulcanisé. Ils ont l'avantage de présenter une bonne résistance aux fluides chimiques agressifs et d'être barrière à de nombreux fluides, en particulier l'essence et les fluides utilisés dans les circuits de climatisation. Cependant ils peuvent être fragiles à basse température. On sait améliorer la résistance au choc du PVDF mais c'est au détriment de sa résistance chimique et de ses propriétés barrière.

On a maintenant trouvé qu'en ajoutant un copolymère tribloc du type poly(styrène)-poly(butadiène)-poly(méthacrylate de méthyle) dans le polymère fluoré qui constitue la couche intérieure d'un tuyau ayant une couche intérieure en polymère fluoré et une couche extérieure en élastomère vulcanisé on obtenait un tuyau ayant une couche intérieure qui conserve la résistance chimique du polymère fluoré et que ce tuyau présente une très bonne résistance au choc.

De plus il est parfois nécessaire que la couche de PVDF soit conductrice. Le frottement d'un solvant sur la couche intérieure en PVDF d'un tuyau peut générer des charges électrostatiques, dont l'accumulation peut conduire à une décharge électrique (étincelle) capable d'enflammer le solvant avec des conséquences catastrophiques (explosion). Aussi, est-il nécessaire de rendre ces pièces conductrices.

Il est connu d'abaisser la résistivité superficielle de résines ou matériaux polymériques en leur incorporant des matériaux conducteurs et/ou semi-conducteurs tels que le noir de carbone, les fibres en acier, les fibres de carbone, les particules (fibres, plaquettes, sphères) métallisées avec de l'or, de l'argent ou du nickel. Parmi ces matériaux, le noir de carbone est plus particulièrement employé, pour des raisons économiques et de facilité de mise en oeuvre. En dehors de ses propriétés électroconductrices particulières, le noir de carbone se comporte comme une charge telle que par exemple le talc, la craie, le kaolin. Ainsi, l'homme de l'art sait que lorsque le taux de charges augmente, la viscosité du mélange polymère / charge augmente. De même, lorsque le taux de charge augmente, le module de flexion du polymère chargé augmente et sa résistance au choc diminue. Ces phénomènes connus et prévisibles sont explicités dans "Handbook of Fillers and Reinforcements for Plastics" édité par H.S. Katz et J.V. Milewski - Van Nostrand Reinhold Company - ISBN 0-442-25372-9, voir en particulier le chapitre 2, section II pour les charges en général et le chapitre 16, Section VI pour le noir de carbone en particulier. Quant aux propriétés électriques du noir de carbone, le bulletin technique "Ketjenblack EC - BLACK 94/01" de la société AKZO NOBEL indique que la résistivité de la formulation chute très brutalement lorsqu'un taux critique de noir de carbone, appelé seuil de percolation, est atteint. Lorsque le taux de noir de carbone augmente encore, la résistivité diminue rapidement jusqu'à atteindre un niveau stable (zone de plateau). On préfère donc, pour une résine donnée, opérer dans la zone de plateau, où une erreur de dosage n'aura qu'une faible influence sur la résistivité du compound.

Le PVDF a un comportement fragile en choc multiaxial. L'addition d'un agent permettant de le rendre électroconducteur comme un noir de carbone va le rendre encore plus fragile. Les différentes façon d'améliorer les propriétés de résistance au choc supposent la plupart du temps l'incorporation de phases élastomériques molles qui peuvent présenter des morphologies de types « core-shell » dans une matrice PVDF. L'inconvénient majeur d'une telle association est une forte diminution de la résistance chimique.

On a maintenant trouvé qu'en ajoutant un copolymère tribloc du type poly(styrène)-poly(butadiène)-poly(méthacrylate de méthyle) et un produit électroconducteur dans le polymère fluoré qui constitue la couche intérieure d'un tuyau ayant une couche intérieure en polymère fluoré et une couche extérieure en élastomère vulcanisé on obtenait un tuyau ayant une couche intérieure antistatique qui conserve la résistance chimique du polymère fluoré et que ce tuyau présente une très bonne résistance au choc.

### [Brève description de l'invention]

La présente invention concerne un tube ayant dans sa direction radiale, de l'intérieur vers l'extérieur:
1) une couche dite intérieure destinée à entrer en contact avec un fluide circulant, la dite couche intérieure comprenant (i) un polymère fluoré, (ii) éventuellement un produit électroconducteur et (iii) un copolymère tribloc ABC, les trois blocs A, B, et C étant reliés entre eux dans cet ordre, chaque bloc étant soit un homopolymère soit un copolymère obtenu à partir de deux ou plusieurs monomères, le bloc A étant relié au bloc B et le bloc B au bloc C au moyen d'une liaison covalente ou d'une molécule intermédiaire reliée à l'un de ces blocs par une liaison covalente et à l'autre bloc par une autre liaison covalente, et tel que :
   - le bloc A est compatible avec le polymère fluoré,
   - le bloc B est incompatible avec le polymère fluoré et est incompatible avec le bloc A,
   - le bloc C est incompatible avec le polymère fluoré, le bloc A et le bloc B,
2) éventuellement une couche de liant,
3) une couche d'élastomere vulcanisé.

**Selon une deuxième forme de l'invention** la couche intérieure est elle même constituée de deux couches l'une contenant un produit électroconducteur l'autre ne contenant pas de produit électroconducteur. Avantageusement celle qui est au contact du fluide circulant contient le produit électroconducteur.

**Selon une troisième forme de l'invention** on dispose une couche de polymère fluoré entre la couche intérieure et la couche de liant ou entre la couche intérieure et la couche d'élastomère vulcanisé si il n'y a pas de liant.

La deuxième et la troisième forme de l'invention peuvent exister simultanément pour le même tube.

Les tubes de l'invention ont de nombreux avantages;
- ils résistent au choc à froid (―40°C),
- ils peuvent être rendus antistatiques,
- ils ont une très bonne résistance aux produits chimiques et donc peuvent transporter des fluides agressifs,
- ils sont barrière à de très nombreux fluides tels que par exemple l'essence des automobiles, les fluides de climatisation,
- ils sont propres c'est à dire que la couche intérieure ne contient essentiellement pas de produit pouvant migrer tels que des oligomères ou des plastifiants il n'y a donc pas de risque que le fluide circulant dans le tube entraîne ces produits qui pourraient boucher des dispositifs placés sur le circuit de ce fluide. En effet le tribloc ABC et le polymère fluoré constituent un mélange stable de polymères, le produit électroconducteur éventuel s'insère dans ce mélange et ne migre pas.

On peut fabriquer ces tubes par coextrusion, chaque couche est introduite à l'état fondu à l'aide d'une extrudeuse dans une tête de coextrusion qui produit des flux concentriques formant le tube. Cette technique est connue en elle même. Le tube est ensuite passé dans un four ou un tunnel chauffant pour effectuer la vulcanisation (cross linking) de l'élastomère. Il est recommandé au cours de la coextrusion d'utiliser une tête de coextrusion dans laquelle le flux d'élastomère reste à une température suffisamment basse (en général de l'ordre de 80 à 120°C) pour ne pas provoquer la vulcanisation avant la formation du tube et surtout boucher l'extrudeuse. On peut aussi fabriquer par coextrusion un tube ne comprenant pas la couche d'élastomère puis ultérieurement faire passer ce tube dans un dispositif dit "de gainage" ou "en tête d'équerre" pour le recouvrir de la couche d'élastomère. Il suffit ensuite comme ci dessus de passer le tube dans un four ou un tunnel chauffant pour effectuer la vulcanisation (cross linking) de l'élastomère.

### [Description détaillée de l'invention]

**S'agissant du polymère fluoré** on désigne ainsi tout polymère ayant dans sa chaîne au moins un monomère choisi parmi les composés contenant un groupe vinyle capable de s'ouvrir pour se polymériser et qui contient, directement attaché à ce groupe vinyle, au moins un atome de fluor, un groupe fluoroalkyle ou un groupe fluoroalkoxy.

A titre d'exemple de monomère on peut citer le fluorure de vinyle; le fluorure de vinylidène (VF2); le trifluoroethylene (VF3); le chlorotrifluoroethylene (CTFE); le 1,2-difluoroethylene; le tetrafluoroethylene (TFE); l'hexafluoropropylene (HFP); les perfluoro(alkyl vinyl) ethers tels que le perfluoro(methyl vinyl)ether (PMVE), le perfluoro(ethyl vinyl) ether (PEVE) et le perfluoro(propyl vinyl) ether (PPVE); le perfluoro( 1,3 -dioxole); le perfluoro(2,2-dimethyl- 1,3 -dioxole) (PDD); le produit ' de formule CF2=CFOCF2CF(CF3)OCF2CF2X dans laquelle X est SO2F, CO2H, CH2OH, CH2OCN ou CH2OPO3H; le produit de formule CF2=CFOCF2CF2SO2F; le produit de formule F(CF2)nCH20CF=CF2 dans laquelle n est 1, 2, 3, 4 or 5; le produit de formule R1CH2OCF=CF2 dans laquelle R1 est l'hydrogene ou F(CF2)z et z vaut 1, 2, 3 ou 4; le produit de formule R3OCF=CH2 dans laquelle R3 est F(CF2)z- et z est 1, 2, 3 or 4; le perfluorobutyl ethylene (PFBE); le 3,3,3-trifluoropropene et le 2-trifluoromethyl-3 ,3 ,3 -trifluoro- 1 -propene.

Le polymère fluoré peut être un homopolymère ou un copolymère, il peut aussi comprendre des monomères non fluorés tels que l'éthylène.

Avantageusement, le polymère fluoré est choisi parmi :
- Les homo- et copolymères du fluorure de vinylidène (VF2) contenant de préférence au moins 50% en poids de VF2, le copolymère étant choisi parmi le chlorotrifluoroéthylène (CTFE), l'hexafluoropropylène (HFP), le trifluoroéthylène (VF3) et le tétrafluoroéthylène (TFE),
- Les homo- et copolymères du trifluoroéthylène (VF3),
- Les copolymères, et notamment terpolymères, associant les restes des motifs chlorotrifluoroéthylène (CTFE), tétrafluoroéthylène (TFE), hexafluoropropylène (HFP) et/ou éthylène et éventuellement des motifs VF2 et/ou VF3.

De préférence, le polymère fluoré est du poly(fluorure de vinylidène) (PVDF) homopolymère. Avantageusement, le PVDF a une viscosité allant de 100 Pa.s à 2000 Pa.s, la viscosité étant mesurése à 230°C, à un gradient de cisaillement de 100 s⁻¹à l'aide d'un rhéomètre capillaire. En effet, ces PVDF sont bien adaptés à l'extrusion et a l'injection. De préférence, le PVDF a une viscosité allant de 300 Pa.s à 1200 Pa.s, la viscosité étant mesurée à 230°C, à un gradient de cisaillement de 100s⁻¹ à l'aide d'un rhéomètre capillaire.

Ainsi, les PVDF commercialisés sous la marque KYNAR® 710 ou 720 sont parfaitement adaptés pour cette formulation.

**S'agissant du produit électroconducteur** ce sont tous les conducteurs de l'électricité. On peut citer à titre d'exemple les métaux et les produits à base de carbone. A titre d'exemple de produits à base de carbone on peut citer le graphite, le noir de carbone, les nanotubes de carbone et les fibres de carbone. On ne sortirait pas du cadre de l'invention en utilisant plusieurs éléments électroconducteurs. Les produits à base de carbone pouvant être utilisés sont décrits dans Handbook of fillers 2^{nd} Edition published by Chem Tec Publishing 1999 page 62 § 2.1.22, page 92 § 2.1.33 et page 184 § 2.2.2.

Avantageusement le produit électroconducteur est choisi parmi les noirs de carbone: Les noirs de carbone, peuvent être des noirs semi-conducteurs, conducteurs, ces noirs de carbone, présentent une surface BET faible. Parmi les noirs de carbone utilisables, ceux de la société MMM Carbon sont particulièrement satisfaisants. On retiendra particulièrement les noirs dont la surface d'adsorption azote est inférieure à 500 m²/g. Avantageusement ces noirs de carbone présentent une surface d'adsorption azote inférieure à 100 m²/g. Parmi ces différents types l'ENSACO® 250 convient particulièrement à l'application.

**S'agissant du copolymère tribloc ABC** Le copolymère à blocs comportant au moins trois blocs A, B et C est tel que le bloc A est relié au bloc B et le bloc B au bloc C au moyen d'une ou plusieurs liaisons simples covalentes. Dans le cas de plusieurs liaisons covalentes, entre le bloc A et le bloc B et/ou entre le bloc B et le bloc C, il peut y avoir un seul motif ou un enchaînement de motifs servant à joindre les blocs entre eux. Dans le cas d'un seul motif, ce dernier peut provenir d'un monomère dit modérateur utilisé dans la synthèse du tribloc. Dans le cas d'un enchaînement de motifs, celui-ci peut être un oligomère résultant d'un enchaînement d'unités monomères d'au moins deux monomères différents dans un ordre alterné ou aléatoire. Un tel oligomère peut relier le bloc A au bloc B et le même oligomère ou un oligomère différent peut relier le bloc B au bloc C.

le bloc A d'un copolymère ABC est considéré comme compatible avec le polymère fluoré si le polymère A identique à ce bloc (donc sans séquences B et C) est compatible avec cette résine à l'état fondu. De même, les blocs A et B sont considérés comme incompatibles si les polymères A et B identiques à ces blocs sont incompatibles. D'une manière générale, par compatibilité entre deux polymères, on entend l'aptitude de l'un à se dissoudre dans l'autre à l'état fondu ou bien leur miscibilité totale. Dans le cas contraire les polymères ou blocs sont dits incompatibles.

Plus l'enthalpie de mélange de deux polymères est faible, plus grande est leur compatibilité. Dans certains cas, il y a une interaction spécifique favorable entre les monomères qui se traduit par une enthalpie de mélange négative pour les polymères correspondants. Dans le cadre de la présente invention, on préfère mettre en oeuvre des polymères compatibles dont l'enthalpie de mélange est négative ou nulle.

L'enthalpie de mélange ne peut cependant pas être mesurée de manière classique pour tous les polymères, et donc la compatibilité ne peut qu'être déterminée de manière indirecte, par exemple par des mesures d'analyse viscoélastique en torsion ou en oscillation ou encore par analyse calorimétrique différentielle. Pour des polymères compatibles, on peut détecter 2 Tg pour le mélange : l'une au moins des deux Tg est différente des Tg des composés purs et se situe dans la plage de températures comprise entre les deux Tg des composés purs. Le mélange de deux polymères totalement miscibles présente une seule Tg.

D'autres méthodes expérimentales peuvent être utilisées pour mettre en évidence la compatibilité des polymères, telles que mesures de turbidité, mesures de diffusion de la lumière, mesures infrarouge (L. A Utracki, Polymer Alloys and Blends, pp 64-117).

Des polymères miscibles ou compatibles sont répertoriés dans la littérature, voir par exemple J. Brandrup and E.H. Immergut : Polymer Handbook, 3rd Edition, Wiley & Sons 1979, New York 1989, pp. VI/348 à VI/364 ; O. Olabisi, L. M. Robeson and M. T. Shaw : Polymer Miscibility, Academic Press, New York 1979, pp. 215-276 ; L.A. Utracki : Polymer Alloys and Blends, Hanser Verlag, Münich 1989. Les listes figurant dans ces références sont données à titre illustratif et ne sont, bien entendu, pas exhaustives.

Avantageusement le bloc A est choisi parmi les homo- et copolymères d'(alkyl)acrylate d'alkyle et par exemple de méthacrylate de méthyle (MAM) et/ou d'acrylate de méthyle ou d'éthyle et/ou celles dérivant d'acétate de vinyle. Avantageusement, le bloc A est du Poly(méthacrylate de méthyle) (PMMA). De préférence, ce PMMA est syndiotactique et sa température de transition vitreuse Tg_{(A)}, mesurée par analyse thermique différentielle, est de +120°C à +140°C.

Avantageusement la Tg de B est inférieure à 0°C et de préférence inférieure à ― 40°C.

Le monomère utilisé pour synthétiser le bloc B élastomérique peut être un diène choisi parmi le butadiène, l'isoprène, le 2,3-diméthyl-1,3-butadiène, le 1,3-pentadiène, le 2-phényl-1,3-butadiène. B est choisi avantageusement parmi les poly(diènes) notamment poly(butadiène), poly(isoprène) et leurs copolymères statistiques, ou encore parmi les poly(diènes) partiellement ou totalement hydrogénés. Parmi les polybutadiènes on utilise avantageusement ceux dont la Tg est la plus faible, par exemple le polybutadiène-1,4 de Tg ( vers ―90° C) inférieure à celle du polybutadiène-1,2. (vers 0° C). Les blocs B peuvent aussi être hydrogènés. On effectue cette hydrogénation selon les techniques habituelles.

Le monomère utilisé pour synthétiser le bloc B élastomérique peut être aussi un (meth)acrylate d'alkyle, on obtient les Tg suivantes entre parenthèses suivant le nom de l'acrylate: l'acrylate d'éthyle (-24°C), l'acrylate de butyle, (-54°C), l'acrylate de 2-éthylhexyle (-85°C), l'acrylate d'hydroxyéthyle (-15°C) et le méthacrylate de 2-éthylhexyle (-10°C). On utilise avantageusement l'acrylate de butyle. Les acrylates sont différents de ceux du bloc A pour respecter la condition de B et A incompatibles.

De préférence les blocs B sont constitués en majorité de polybutadiène-1,4.

De préférence, le bloc C a une température de transition vitreuse Tg_{(C)} ou une température de fusion Tf_{(C)} supérieure à la Tg_{(B)} du bloc B. Cette caractéristique confère la possibilité que le bloc C soit à l'état vitreux ou soit dans un état partiellement cristallin et le bloc B à l'état élastomérique, pour une même température d'utilisation Tp.

D'après la présente invention, il est possible de choisir la nature des blocs B pour avoir une certaine Tg_{(B)} déterminée et ainsi, à la température d'utilisation Tp du matériau ou de l'objet formé à partir du mélange, d'avoir un état élastomérique ou souple de ces polymères blocs B. Par contre, les polymères blocs C pouvant avoir une Tg_{(C)} ou une Tf supérieure à la Tg_{(B)}, ils peuvent être dans un état vitreux relativement rigide à la même température d'utilisation.

Comme les blocs C sont incompatibles avec le polymère fluoré, les blocs A et les blocs B, ils forment une phase discrète rigide à l'intérieur du matériau en formant des nanodomaines inclus dans le matériau et servant d'ancrages dans la zone d'une des extrémités de chaque bloc B. L'autre extrémité de chaque bloc B est relié à un bloc A qui possède une forte affinité avec le polymère fluoré. Cette forte affinité procure un second ancrage dans la zone de la seconde extrémité du bloc B.

Avantageusement, le bloc C est choisi parmi les homopolymères ou les copolymères du styrène ou de l'α-méthylstyrène.

Les triblocs qui contiennent des séquences dérivant d'(alkyl)acrylate d'alkyle peuvent notamment être préparés par polymérisation anionique par exemple selon les procédés décrits dans les demandes de brevet EP 524.054 et EP 749.987.

De préférence, le tribloc ABC est du Poly (méthyle méthacrylate-*b*-butadiène-*b*-styrène).

Le copolymère tribloc ABC peut contenir, comme produits secondaires de sa synthèse, un copolymère dibloc B-C et éventuellement de l'homopolymère C. Le copolymère tribloc ABC peut aussi contenir, comme produits secondaires de sa synthèse, un copolymère dibloc A-B et éventuellement de l'homopolymère A.

En effet, la synthèse d'un copolymère tribloc se fait préférentiellement en réunissant successivement le bloc A au bloc B puis au bloc C ou inversement le bloc C au bloc B puis au bloc A suivant la nature des trois blocs A, B et C. Le bloc A étant par définition celui qui est compatible avec le polymère fluoré. Le copolymère tribloc ABC peut aussi contenir des copolymères blocs linéaires symétriques ou en étoiles du type ABA ou CBC.

Avantageusement la quantité totale en poids des produits secondaires de synthèse c'est à dire de ces homopolymères A, C ou copolymères blocs AB, BC, ABA et CBC est inférieure à 2 fois la quantité de tribloc ABC. De préférence cette quantité est inférieure à une fois et mieux encore 0,5 fois la quantité de tribloc ABC. Plus précisément les produits secondaires sont essentiellement le dibloc BC, la quantité de BC peut être comprise entre 25 et 35 parties en poids pour respectivement 75 à 65 parties de ABC et est avantageusement d'environ 30 parties pour 70 parties de ABC.

La masse moléculaire moyenne en nombre (Mₙ) du copolymère tribloc, y compris les produits secondaires de synthèse, est supérieure ou égale à 20000 g.mol⁻¹, et de préférence comprise entre 50000 et 200000 g.mol⁻¹. Avantageusement le copolymère tribloc ABC, y compris les produits secondaires, est constitué de :
- 20 à 93 et de préférence de 30 à 70 parties en poids de séquences A,
- 5 à 68 et de préférence de 10 à 40 parties en poids de séquences B,
- 2 à 65 et de préférence de 5 à 40 parties en poids de séquences C.

La demanderesse a constaté que dans le cas des triblocs, les produits secondaires issus de la synthèse, tels que les diblocs ou les homopolymères, n'étaient pas préjudiciables aux propriétés mécaniques du mélange.

Avantageusement la couche intérieure, c'est à dire le mélange du polymère fluoré, du produit électroconducteur et du copolymère tribloc ABC avec éventuellement les produits secondaires de la synthèse du tribloc, contient en poids (le total étant 100%):
65 à 97% de polymère fluoré,
0 à 25% de produit électroconducteur,
3 à 15% de copolymère triloc ABC.
S'agissant d'une couche intérieure conductrice sa composition en poids peut être, le total étant 100%:
65 à 92% et avantageusement 70 à 85% de polymère fluoré,
5 à 25% et avantageusement 10 à 20% de produit électroconducteur,
3 à 15% et avantageusement 5 à 10% de copolymère triloc ABC.

**S'agissant de la couche de liant** on désigne ainsi tout produit qui permet une adhésion entre la couche intérieure et la couche d'élastomère vulcanisé. A titre d'exemple on peut citer les mélanges de polymère fluoré, de PMMA et éventuellement d'élastomère acrylique du type core shell (coeur écorce) ; Le PMMA peut comprendre de l'acide (meth)acrylique copolymerisé. Ces liants sont décrits dans le brevet US 5242976. On peut encore citer les mélanges à base de poly(meth)acrylates modifiés par imidisation et contenant éventuellement un polymère fluoré; ils sont décrits dans les brevets US 5939492, US 6040025, US 5795939 et EP 726926.

**S'agissant de la couche d'élastomère vulcanisé** les élastomères synthétiques ou naturels vulcanisables convenant pour la mise en oeuvre de la présente invention sont bien connus de l'homme de métier, le terme élastomère dans la définition de la présente invention signifiant que celui-ci peut être constitué de mélanges de plusieurs élastomères.

Ces élastomères ou mélanges d'élastomères présentent une déformation rémanente à la compression (D.R.C.) à 100° C inférieure à 50 % généralement entre 5 et 40 % et de préférence inférieure à 30 %.

Parmi ceux-ci, on peut citer le caoutchouc naturel, le polyisoprène ayant un taux élevé de double liaison en position cis, une émulsion polymérisée à base de copolymère styrène/butadiène, un polybutadiène ayant un taux élevé de double liaison en position cis obtenu par catalyse au nickel, cobalt, titane ou néodynium, un terpolymère éthylène halogéné/propylène/diène, un caoutchouc butyle halogéné, un copolymère séquencé styrène/butadiène, un copolymère séquencé styrène/isopropène, les produits halogénés des polymères ci-dessus, un copolymère acrylonitrile/butadiène, un élastomère acrylique, un élastomère fluoré, le chloroprène et les caoutchoucs épichlorhydrine.

Si le tube de l'invention ne comprend pas de couche de liant il est recommandé que l'élastomère soit choisi parmi les élastomères fonctionnalisés, les élastomères ayant des motifs acrylates, les élastomères halogénés et les caoutchoucs épichlorhydrine. S'agissant des élastomères fonctionnalisés cette fonction est avantageusement une fonction acide carboxylique ou anhydride d'acide carboxylique. Dans le cas où les élastomères mentionnés plus haut ne comportent pas de radicaux acide carboxylique ou anhydride desdits acides (ce qui est le cas de la plupart de ceux-ci), lesdits radicaux seront apportés par greffage, de façon connue, des élastomères mentionnés ci-dessus où par des mélanges d'élastomères, par exemple avec des élastomères à motifs acryliques tels que l'acide acrylique. De préférence, les élastomères vulcanisables précités comportent un taux en poids de radicaux acide carboxylique ou anhydride de diacide carboxylique compris entre 0,3 et 10 % par rapport auxdits élastomères.

De même on peut mélanger des élastomères n'ayant pas ni fonctions, ni motifs acrylates, qui ne sont pas halogénés et qui ne sont pas des caoutchoucs épichlorhydrine avec au moins un élastomère choisi parmi les élastomères fonctionnalisés, les élastomères ayant des motifs acrylates, les élastomères halogénés et les caoutchoucs épichlorhydrine.

Parmi les élastomères mentionnés ci-dessus, on peut choisir ceux compris dans le groupe suivant : les élastomères nitriles carboxylés, les élastomères acryliques, les polybutadiènes carboxylés, les terpolymères éthylène/propylène/diène greffés ou les mélanges de ces polymères avec les mêmes élastomères mais non greffés comme les caoutchoucs nitriles, les polybutadiènes, les terpolymères éthylène/propylène/diène, seuls ou en mélange.

Les systèmes de vulcanisation convenant pour la présente invention sont bien connus de l'homme de métier et en conséquence, l'invention n'est pas limitée à un type particulier de systèmes.

Lorsque l'élastomère est à base de monomère insaturé (butadiène, isoprène, vinylidène-norbornène...) on peut citer quatre types de systèmes de vulcanisation :
- Systèmes au soufre constitués de soufre associé aux accélérateurs usuels tels que les sels métalliques de dithiocarbamates (diméthyl dithiocarbamate de zinc, de tellure, etc.), les sulféramides, etc.
   Ces systèmes peuvent contenir également de l'oxyde de zinc associé à de l'acide stéarique.
- Systèmes donneurs de soufre dans lesquels la majorité du soufre utilisé pour les pontages, provient de molécules soufrées telles que les composés organosoufrés cités plus haut.
- Systèmes aux résines phénoliques constitués de résines formophénoliques difonctionnelles pouvant être halogénées associées à des accélérateurs tels que le chlorure stanneux, l'oxyde de zinc.
- Systèmes aux peroxydes. Tous les donneurs de radicaux libres peuvent être utilisés (peroxydes de dicumyle, etc.) en association avec l'oxyde de zinc et l'acide stéarique.

Lorsque l'élastomère est acrylique (polyacrylate de butyle avec fonctions acides ou époxy ou toute autre fonction réactive permettant la réticulation), on utilise les réticulants habituels à base de diamines (orthotoluidyl guanidine, diphénylguanidine, etc.) ou de diamines bloquées (carbamate d'hexaméthylène diamine etc.).

Les compositions élastomériques peuvent être modifiées pour certaines propriétés particulières (amélioration des propriétés mécaniques par exemple) par l'addition de charges telles que le noir de carbone, la silice, le kaolin, l'aluminium, l'argile, le talc, la craie, etc. Ces charges peuvent être traitées en surface par des silanes, des polyéthylèneglycols ou toute autre molécule de couplage. En général, le taux de charges en parties en poids est compris entre 5 et 100 pour 100 parties d'élastomères.

En outre, les compositions peuvent être assouplies par des plastifiants tels que les huiles minérales dérivées du pétrole, les esters de l'acide phtalique ou de l'acide sébacique, les plastifiants polymères liquides tels que le polybutadiène de faible masse éventuellement carboxylé, et d'autres plastifiants bien connus de l'homme de métier.

Les combinaisons d'agent de vulcanisation utilisées sont telles qu'elles doivent permettre une réticulation complète de l'élastomère selon une cinétique conduisant à de bonnes propriétés de résistance à la séparation de la couche d'élastomère et de la couche intérieure ou de la couche de liant.

Les tubes de l'invention peuvent être de diamètre extérieur compris entre 8 mm et 25 cm. L'épaisseur de la couche intérieure peut être comprise entre 15 et 200 µm, celle du liant éventuel entre 5 et 100 µm.

Dans la troisiéme forme de l'invention le polymère fluoré de la couche entre la couche intérieure et la couche de liant ou entre la couche intérieure et la couche d'élastomère vulcanisé si il n'y a pas de liant est choisi parmi les polymères fluorés décrits pour la couche intérieure. Avantageusement c'est du PVDF homopolymère ou copolymère.

## Revendications

1. Tube ayant dans sa direction radiale, de l'intérieur vers l'extérieur:
1) une couche dite intérieure destinée à entrer en contact avec un fluide circulant, la dite couche intérieure comprenant (i) un polymère fluoré, (ii) éventuellement un produit électroconducteur et (iii) un copolymère tribloc ABC, les trois blocs A, B, et C étant reliés entre eux dans cet ordre, chaque bloc étant soit un homopolymère soit un copolymère obtenu à partir de deux ou plusieurs monomères, le bloc A étant relié au bloc B et le bloc B au bloc C au moyen d'une liaison covalente ou d'une molécule intermédiaire reliée à l'un de ces blocs par une liaison covalente et à l'autre bloc par une autre liaison covalente, et tel que :
- le bloc A est compatible avec le polymère fluoré,
- le bloc B est incompatible avec le polymère fluoré et est incompatible avec le bloc A,
- le bloc C est incompatible avec le polymère fluoré, le bloc A et le bloc B,
2) éventuellement une couche de liant,
3) une couche d'élastomere vulcanisé.

2. Tube selon la revendication 1 dans lequel le polymère fluoré de la couche intérieure est un PVDF homopolymère ou copolymère.

3. Tube selon la revendication 1 ou 2 dans lequel le produit électroconducteur de la couche interieure est choisi parmi le graphite, le noir de carbone, les nanotubes de carbone et les fibres de carbone.

4. Tube selon la revendication 3 dans lequel le produit électroconducteur est un noir de carbone ayant une surface d'adsorption azote inférieure à 500 m²/g.

5. Tube selon la revendication 4 dans lequel la surface est inferieure à 100 m2/g.

6. Tube selon l'une quelconque des revendications précédentes dans lequel le tribloc ABC de la couche interieure est du Poly (méthyle méthacrylate-*b*-butadiène-*b*-styrène).

7. Tube selon l'une quelconque des revendications précédentes dans lequel la masse moléculaire moyenne en nombre (Mₙ) du copolymère tribloc ABC de la couche intérieure est supérieure ou égale à 20000 g.mol⁻¹, et de préférence comprise entre 50000 et 200000 g.mol⁻¹.

8. Tube selon l'une quelconque des revendications précédentes dans lequel les proportions sont en poids dans la couche intérieure :
65 à 97% de polymère fluoré,
0 à 25% de produit électroconducteur,
3 à 15% de copolymère triloc ABC.

9. Tube selon la revendication 8 dans lequel les proportions sont en poids de:
65 à 92% de polymère fluoré,
5 à 25% de produit électroconducteur,
3 à 15% de copolymère triloc ABC.

10. Tube selon l'une quelconque des revendications précédentes dans lequel la couche intérieure est elle même constituée de deux couches l'une contenant un produit électroconducteur l'autre ne contenant pas de produit électroconducteur.

11. Tube selon l'une quelconque des revendications précédentes dans lequel on dispose une couche de polymère fluoré entre la couche intérieure et la couche de liant ou entre la couche intérieure et la couche d'élastomère vulcanisé si il n'y a pas de liant.
